# EUROPÄISCHE PATENTSCHRIFT

(11) **EP 3 946 877 B1**
(45) Veröffentlichungstag und Bekanntmachung des Hinweises auf die Patenterteilung: **19.07.2023**
(21) Anmeldenummer: 20718572.9
(22) Anmeldetag: 30.03.2020
(51) Int. Cl.: B29C 44/58, B29C 33/44, B29C 44/60, B29C 44/44, B29C 44/34

(54) **FORMTEILMASCHINE**
MOULDING MACHINE
MACHINE DE MOULAGE

(30) Priorität: 04.04.2019 DE 102019204835
(43) Veröffentlichungstag der Anmeldung: 09.02.2022
(73) Patentinhaber: Erlenbach GmbH, 56355 Lautert (DE)
(72) Erfinder: SPRISTERSBACH, Lars, 56357 Himmighofen (DE); BREIDENBACH, Martin, 56357 Buch (DE)
(74) Vertreter: WSL Patentanwälte Partnerschaft mbB
(86) Internationale Anmeldenummer: PCT/EP2020/058885
(87) Internationale Veröffentlichungsnummer: WO 2020/201173

(56) Entgegenhaltungen:
- DE-A1- 2 144 451
- JP-A- S55 164 131
- US-A- 4 106 884
- US-A1- 2017 284 521
- US-B1- 6 435 855

## Beschreibung

Die vorliegende Erfindung betrifft eine Formteilmaschine, ein Maschinensystem, ein Kontaktelement und dessen Verwendung sowie ein Verfahren zum Betreiben eines Maschinensystems.

Formteilmaschinen werden zur Herstellung von Formteilen aus Kunststoff mittels eines Urformverfahrens verwendet. Zu den Urformverfahren gehört das Schäumen von Formteilen. Beim Schäumen wird ein Kunststoffgranulat in eine Kavität eines Formwerkzeugs eingebracht und dort aufgeschäumt. Die einzelnen Perlen des Kunststoffgranulats vergrößern dabei ihr Volumen und verschmelzen miteinander. Nach dem Abkühlen wird das Formwerkzeug geöffnet und das Formteil kann entfernt werden.

Zum Schäumen wird das Kunststoffgranulat vor, während und/oder nach der Befüllung des Formwerkzeugs mit Wasserdampf beaufschlagt, was zum Anwachsen (Expandieren) der Perlen führt. Zu diesem Zweck ist bei Formteilmaschinen eine nach außen abgeschlossene Prozesskammer vorgesehen, die von einem Gehäuse umschlossen und in der das Formwerkzeug angeordnet ist. Die Prozesskammer ist größer als das Formwerkzeug, sodass zwischen der Außenseite des Formwerkzeugs und der Innenseite des Gehäuses ein Zwischenraum gebildet wird, der als Leitung für den Wasserdampf dient. Wasserdampf wird durch eine oder mehrere an dem Gehäuse angeschlossene Schlauchleitungen in den Zwischenraum eingebracht, gelangt anschließend durch Bohrungen in dem Formwerkzeug in die Kavität desselben und schäumt dort das Kunststoffgranulat auf. Zum Anschließen der Schlauchleitungen weist das Gehäuse einen oder mehrere Anschlüsse auf.

Sowohl das Formwerkzeug als auch das Gehäuse bestehen in der Regel aus zwei Teilen (Hälften), die jeweils entlang einer Trennebene voneinander getrennt sind. Die beiden Teile des Formwerkzeugs sind jeweils an einem der Teile des Gehäuses (Kammerteil) befestigt. Die Gesamtheit aus Formwerkzeug und Gehäuse wird auch als Werkzeugblock bezeichnet.

Zum Öffnen und Schließen des Formwerkzeugs weisen Formteilmaschinen einen beweglichen Trägerrahmen auf, an dem der eine Kammerteil gemeinsam mit dem einen Teil des Formwerkzeugs befestigt ist. Die anderen Teile des Gehäuses und des Formwerkzeugs sind an einem feststehenden (nichtbeweglichen) Trägerrahmen angeordnet. Der bewegliche Trägerrahmen ist entlang einer Schließrichtung zwischen einer Offenstellung und einer Schließstellung, in der das Formwerkzeug und die Prozesskammer geschlossen sind, bewegbar. Der Schließvorgang wird durch eine elektrische, hydraulische und/oder mechanische Antriebseinrichtung ausgeführt.

Zum Entfernen des Formteils aus dem Formwerkzeug werden Auswerferstangen verwendet. Eine Auswerferstange ist entlang ihrer Längsachse verschiebbar in dem Werkzeugblock gelagert und weist an einem Ende einen Teller auf. Der Teller ist so geformt, dass er während des Schäumens einen Teil der späteren Außenkontur des Formteils bildet, also einen Teil der inneren Oberfläche des Formwerkzeugs darstellt. Beim Entfernen des Formteils wird die Auswerferstange entlang ihrer Längsachse in Richtung der Trennebene des Formwerkzeugs bewegt, wodurch das Formteil aus der Form gedrückt wird. In der Praxis ist regelmäßig eine Mehrzahl von Auswerferstangen pro Formwerkzeug vorgesehen.

Die Auswerferstangen werden durch eine gemeinsame Auswerferplatte aktuiert. Die Auswerferplatte bewegt sich hierzu auf das den Tellern gegenüberliegende Ende der Auswerferstangen zu und drückt die Auswerferstangen weiter vorwärts in die entsprechende Richtung (Auswurfrichtung). Im Gegensatz zu Kunststoffspritzgießmaschinen sind die Auswerferstangen nicht mit der Auswerferplatte verbunden. Dies ist ein wesentlicher Unterschied zwischen Formteilmaschinen, bei denen ein Schäumprozess stattfindet, und Kunststoffspritzgießmaschinen.

Kunststoffspritzgießmaschinen mit Auswerfern sind beispielsweise aus den Druckschriften WO 2011/087482 A2, US 2008/0277822 A1, DE 1 207 555 und EP 2 644 351 A2 bekannt.

Die DE 2 144 451 A offenbart eine Formteilmaschine gemäß dem Oberbegriff des Anspruchs 1 und ein Verfahren gemäß dem Oberbegriff des Anspruchs 13. Sie zeigt eine Auswerfervorrichtung für in einem Werkzeug erzeugte Formlinge, bei der Auswerferstifte vorgesehen sind, die durch das Werkzeugteil durchgeführt sind, in welchem der Formling nach dem Öffnen verbleibt. Die Auswerferstifte sind verschiebbar und können auf diese Weise den Formling auswerfen.

Aus der US 6,435,855 B1 ist eine Gießvorrichtung für Harz bekannt, die Auswerferstifte aufweist. Das vordere Ende der Auswerferstifte ist halbkugelförmig. Aus der US 2017/0284521 A1 ist eine Bewegungsübertragungsvorrichtung für eine Gießvorrichtung bekannt.

Die US 4,106,884 offenbart eine Formteilmaschine zur Herstellung von geschäumten Formteilen mit federbelasteten Auswerferstiften.

Drückt die Auswerferplatte bei Formteilmaschinen gegen die Auswerferstangen, so bewegen sich die Auswerferstangen in Richtung der Trennebene. Bewegt sich die Auswerferplatte anschließend in die entgegengesetzte Richtung (rückwärts), so bewegen sich die Auswerferstangen nicht automatisch mit. Für eine Bewegung der Auswerferstangen in dieser entgegengesetzten Richtung weist jede Auswerferstange eine Rückstellfeder oder einen anderen Rückstellmechanismus auf. Die Rückstellfeder bewirkt, dass die Auswerferstangen gegen die Auswerferplatte gedrückt werden, wenn sich die Auswerferplatte rückwärts bewegt.

Es kann vorkommen, dass einzelne Auswerferstangen nicht oder nur teilweise von der Rückstellfeder in ihre Ausgangslage zurück gedrückt werden. Gründe hierfür können Verschmutzungen oder eine mangelhafte Schmierung sowie Beschädigungen der Auswerferstange oder ihrer Führung sein. Befindet sich die Auswerferstange und mit ihr der Teller nicht in der Ausgangslage, so kann dies schwerwiegende Folgen haben. So kann es vorkommen, dass der nachfolgende Schäumprozess ein Ausschussteil hervorbringt, da sich der Teller der Auswerferstange nicht in der vorgesehenen Position befindet.

Erheblich größer ist jedoch die Gefahr, dass sich ein Entnahmeautomat für das Formteil zwischen die Formwerkzeughälften bewegt, gegen die Auswerferstange stößt und der Entnahmeautomat und die Auswerferstange oder sogar das Formwerkzeug beschädigt werden. Bei einem solchen Zwischenfall muss die Formteilmaschine stillgelegt und repariert werden. Der Gesamtschaden eines solchen Zwischenfalls inklusive des Ausfalls der Formteilmaschine beläuft sich schnell auf mehrere Tausend Euro.

Es ist daher Aufgabe der Erfindung, die Gefahr eines Maschinenschadens durch fehlerhaft arbeitende Auswerferstangen zu verringern oder zu verhindern.

Diese Aufgabe wird durch eine Formteilmaschine gemäß Anspruch 1 gelöst.

Die erfindungsgemäße Aufgabe wird durch eine Formteilmaschine mit einem feststehenden ersten Trägerrahmen und einem relativ zu dem ersten Trägerrahmen entlang einer Schließrichtung zwischen einer Offenstellung und einer Schließstellung bewegbaren zweiten Trägerrahmen zur gemeinsamen Aufnahme eines zumindest eine Auswerferstange aufweisenden Werkzeugblocks und mit einer Auswerferplatte gelöst, wobei die Auswerferplatte relativ zu mindestens einem Trägerrahmen in Schließrichtung bewegbar ist. Die Formteilmaschine ist durch zumindest ein der Auswerferstange und/oder der Auswerferplatte zuordenbares Kontaktelement und durch eine Auswerteeinrichtung zum Erfassen von Kontakten zwischen Auswerferstange und Auswerferplatte mittels des Kontaktelements gekennzeichnet.

Während des Auswurfvorgangs kommen die Auswerferplatte und die Auswerferstangen in Kontakt. Der Kontakt bleibt für eine vorbestimmte Zeit bestehen und beginnt, sobald sich die Auswerferplatte weit genug in Richtung der Auswerferstangen bewegt hat, um diese zu berühren. Wurde das in der Kavität des Formwerkzeugs befindliche Formteil ausgeworfen, so bewegt sich die Auswerferplatte zurück, was ebenfalls als Teil des Auswurfvorgangs angesehen wird. Die Kontakte zwischen Auswerferplatte und Auswerferstangen enden, wenn sich die Teller der Auswerferstangen wieder in ihren für den Schäumprozess vorgesehenen Positionen befinden. Die Rückstellfedern der Auswerferstangen können dann entspannt sein oder eine Vorspannung aufweisen, um die Teller in Position zu halten.

Die erfindungsgemäßen Kontaktelemente und die Auswerteeinrichtung ermöglichen eine Erfassung der Berührung zwischen Auswerferplatte und Auswerferstangen. Durch die Zuordnung wird das Kontaktelement entweder Teil der Auswerferplatte oder Teil der Auswerferstange.

Mit der erfindungsgemäßen Formteilmaschine ist es möglich, den Auswurfvorgang zu überwachen und anhand der Kontakte zwischen Auswerferplatte und Auswerferstangen festzustellen, ob alle Auswerferstangen zuverlässig funktionieren. Bricht ein Kontakt zwischen einer Auswerferstange und der Auswerferplatte während des Auswurfvorgangs zu früh ab, so wird das durch die Auswerteeinrichtung mittels des zugehörigen Kontaktelements erfasst. Anschließend kann beispielsweise ein Alarmsignal erzeugt werden, das den Betreiber auf die mangelnde Funktionstüchtigkeit der Auswerferstange hinweist.

Der Werkzeugblock weist bevorzugt eine Prozesskammer mit einem Prozesskammergehäuse sowie ein Formwerkzeug auf. Die Prozesskammer umgibt das Formwerkzeug bevorzugt zumindest teilweise. Mittels Bohrungen wird ermöglicht, dass Wasserdampf aus der Prozesskammer in eine Kavität des Formwerkzeugs strömen kann. Das Formwerkzeug besteht bevorzugt aus zwei Formwerkzeughälften. Das Prozesskammergehäuse weist bevorzugt zwei Gehäuseteile auf.

Das Kontaktelement weist bevorzugt zumindest ein elektrisches Bauteil auf. elektrische Bauteile sind für die Erfassung eines Kontakts gut geeignet und arbeiten zuverlässig. Zudem kann ein solches Kontaktelement ohne großen Aufwand in die Betriebselektronik der Formteilmaschine integriert werden.

Bei vorteilhaften Weiterbildungen ist das Kontaktelement elektrisch leitend und weist ein elektrisches Widerstandselement auf. Zudem ist eine Spannungsquelle an die Auswerferplatte und an zumindest einen der Trägerrahmen angeschlossen und die Auswerteeinrichtung ist zum Erfassen einer zwischen der Auswerferplatte und der Auswerferstange anstehenden elektrischen Spannung ausgebildet. Ein solcher Aufbau ist wenig aufwändig und im Betrieb sehr robust. Der elektrische Widerstand R des elektrischen Widerstandselements beträgt bevorzugt 47 kΩ ≤ R ≤ 470 kΩ. Bevorzugt ist für jede Auswerferstange ein Kontaktelement vorgesehen.

Durch den Kontakt zwischen Auswerferplatte und Auswerferstange wird ein Stromkreis geschlossen, der dann von einem der Pole der Spannungsquelle zu dem Trägerrahmen, über das Formwerkzeug zu der Auswerferstange und von dort über das Kontaktelement zur Auswerferplatte und zurück zu dem zweiten Pol der Spannungsquelle verläuft. Bleibt eine Auswerferstange stecken und bewegt sich nicht zurück in ihre Ausgangsposition, so wird der Kontakt zwischen Auswerferstange und Auswerferplatte zu früh unterbrochen, was mittels der Auswerteeinrichtung registriert werden kann.

Grundsätzlich können auch mehrere Stromkreise und/oder mehrere Auswerteeinrichtungen vorgesehen sein. Auswerferstangen können einzeln oder zu mehreren Teil eines bestimmten Stromkreises sein.

Die Auswerteeinrichtung weist bevorzugt ein Spannungsmessgerät auf, das ebenfalls Teil des Stromkreises ist und die zwischen der Auswerferplatte und der Auswerferstange anstehende elektrische Spannung erfasst. Alternativ oder zusätzlich ist es möglich, ein Strommessgerät vorzusehen, das ebenfalls Teil des Stromkreises ist und den zwischen der Auswerferplatte und der Auswerferstange fließenden elektrischen Strom erfasst. Ein Spannungsmessgerät ist jedoch für die Verwendung mit einer speicherprogrammierbaren Steuerung (SPS) besonders vorteilhaft.

Das Kontaktelement weist bevorzugt einen Korpus aus einem elektrisch isolierenden Material und zwei gegenüberliegend an dem Korpus angeordnete elektrische Anschlusselemente auf, wobei das elektrische Widerstandelement die zwei elektrischen Anschlusselemente miteinander verbindet. Unter einem elektrisch isolierenden Material werden insbesondere Materialien mit einem spezifischen Widerstand größer 10^8 Ω•cm verstanden. Durch den isolierenden Korpus wird ermöglicht, dass Strom nur durch das elektrische Widerstandelement fließen kann, wodurch die mittels der Auswerteeinrichtung durchgeführte Spannungsmessung verbessert wird.

Ein Kontaktelement mit einem elektrischen Widerstandselement wird bevorzugt einer Auswerferstange zugeordnet. Hierfür weist das Kontaktelement vorteilhafterweise ein Verbindungsmittel, beispielsweise ein Gewinde, auf, mittels dessen das Kontaktelement an einer Auswerferstange anbringbar ist.

Bei alternativen, ebenfalls vorteilhaften Weiterbildungen weist das Kontaktelement eine kapazitive Sensoreinheit auf. Kapazitive Sensoreinheiten, insbesondere solche in flächiger Ausgestaltung, sind im Bereich der Smartphones bekannt und ermöglichen dort die Herstellung sogenannter Touchscreens. Erfindungsgemäß wird die kapazitive Sensoreinheit bevorzugt der Auswerferplatte zugeordnet, um die Anwesenheit von Auswerferstangen zu registrieren. Auf diese Weise wird ebenfalls ein Kontakt zwischen Auswerferstange und Auswerferplatte erfasst, wodurch hängen gebliebene Auswerferstangen ermittelt werden können.

Die kapazitive Sensoreinheit ist bevorzugt eine PCAP-Folie. PCAP steht für projected capacitance, eine bestimmte Bauart von kapazitiven, flächigen Sensoreinheiten und wird alternativ auch mit PCT abgekürzt. Eine PCAP-Folie eignet sich besonders gut für die Verwendung in einer Formteilmaschine, da zum Auslösen eines Signals kein Kontakt mit der Folie notwendig ist, sodass die Folie vor starken mechanischen Einflüssen und Beschädigungen geschützt werden kann. Besonders bevorzugt ist die PCAP-Folie eine sogenannte Multitouchfolie, die mehrere, gleichzeitig auftretende Kontakte erkennen kann.

Die Auswerteeinrichtung kann zumindest teilweise in die PCAP-Folie integriert sein.

Das Kontaktelement weist bevorzugt eine Schutzplatte zur direkten Kontaktierung der Auswerferstangen auf. Die Schutzplatte schützt die kapazitive Sensoreinheit vor äußeren Einflüssen, insbesondere vor Beschädigungen durch die Auswerferstangen. Dadurch wird die Lebensdauer des Kontaktelements erhöht.

Die Schutzplatte weist bevorzugt eine Dicke SD von 3 mm ≤ SD ≤ 10 mm auf. Diese Grenzwerte haben sich im Rahmen einer Versuchsreihe als besonders vorteilhaft herausgestellt. Unterhalb von 3 mm verschleißt die Schutzplatte zu schnell und bietet keinen ausreichenden Schutz für die kapazitive Sensoreinheit, oberhalb von 10 mm ist die kapazitive Sensoreinheit nur noch eingeschränkt oder überhaupt nicht mehr in der Lage, eine Berührung zwischen Auswerferstange und Auswerferplatte zu erfassen.

Die Schutzplatte weist bevorzugt mindestens eines der folgenden Materialien auf oder besteht aus einem der folgenden Materialien:
- Polymethylmethacrylat (PMMA)
- Polycarbonat (PC)
- Polyvinylchlorid (PVC)
- Polyethylen (PE)

Polycarbonat ist aufgrund seiner mechanischen Eigenschaften besonders vorteilhaft. Eine Schutzplatte, die Polycarbonat aufweist oder aus Polycarbonat besteht bietet herausragenden Schutz für die kapazitive Sensoreinheit und verschleißt weniger als Schutzplatten aus anderen Materialien.

Im Bereich von Touchscreens, wo ebenfalls kapazitive Sensoreinheiten zum Einsatz kommen, ist naturgemäß eine geringe Opazität der über der Sensoreinheit liegenden Schutzschicht erwünscht, was aber zu Einbußen im Bereich der mechanischen Widerstandsfähigkeit führen kann oder die Verwendung von besonders hochpreisigen Materialien erfordert. Bei der erfindungsgemäßen Formteilmaschine ist eine geringe Opazität der Schutzplatte nicht erforderlich, sodass auch Materialien eingesetzt werden können, die opak sind. Die Schutzplatte kann daher opake oder teilweise opake Materialien aufweisen oder aus diesen bestehen. Die Schutzplatte ist bevorzugt nicht-leitend.

Das Kontaktelement weist bevorzugt zwischen der kapazitiven Sensoreinheit und einem Rahmen der Auswerferplatte einen Isolator, insbesondere eine Isolatorplatte, auf. Der Isolator ermöglicht einen störungsfreien Betrieb der kapazitiven Sensoreinheit. Vorteilhafterweise besteht der Isolator aus einem elektrisch isolierenden Material mit einem spezifischen Widerstand größer 10^8 Ω•cm. Die Isolatorplatte weist bevorzugt eine Dicke ID von 3 mm ≤ ID ≤ 10 mm auf. Auch die Grenzwerte für die Dicke ID wurden im Rahmen einer Versuchsreihe ermittelt. Unterhalb von 3 mm ist die Gefahr von Spannungsdurchschlägen zu groß. Eine Dicke ID von mehr als 10 mm ist schlichtweg überflüssig und führt zu erhöhten Materialkosten.

Der Isolator weist bevorzugt mindestens eines der folgenden Materialien auf:
- Holz, insbesondere Sperrholz
- Kunststoff, insbesondere Duroplast und/oder Thermoplast.

Bei vorteilhaften Weiterbildungen ist zumindest ein einer Auswerferstange zuordenbares Druckelement vorgesehen. Das Druckelement wird insbesondere in Verbindung mit der kapazitiven Sensoreinheit verwendet und kann dann endseitig an einem Stangenkörper befestigt werden, sodass bei bestimmungsgemäßem Gebrauch ein Kontakt zwischen dem Druckelement und der Auswerferplatte und kein Kontakt zwischen dem Stangenkörper und der Auswerferplatte erfolgt. Das Druckelement weist bevorzugt einen größeren Durchmesser als der Stangenkörper auf, sodass sich die bei dem Kontakt entstehende mechanische Belastung auf eine größere Fläche auf der Auswerferplatte verteilt. Der Durchmesser des Druckelements ist jedoch bevorzugt kleiner oder gleich dem Durchmesser des Auswurftellers der jeweiligen Auswerferstange.

Das Druckelement besteht vorteilhafterweise zumindest teilweise aus einem Elastomer. Auf diese Weise wird die mechanische Belastung der Schutzplatte verringert. Unter einem Elastomer wird insbesondere ein Material mit einer Shore-D-Härte < 100 verstanden. Auch andere Materialien mit geringer Härte können verwendet werden.

Das Druckelement besteht bevorzugt zumindest teilweise aus einem leitfähigen Material. Um bei einer kapazitiven Sensoreinheit ein Signal auszulösen, ist ein leitfähiges Material erforderlich. Der Stangenkörper einer Auswerferstange besteht in der Regel aus einem leitfähigen Material, kommt also prinzipiell für das Auslösen eines Signals in Frage. Insbesondere bei einem Druckelement, das teilweise aus einem Elastomer besteht, kann es sinnvoll sein, das Druckelement zusätzlich teilweise aus einem leitfähigen Material herzustellen, sodass bei einem Kontakt zwischen Druckelement und Auswerferplatte ein Signal in der kapazitiven Sensoreinheit ausgelöst wird. Das leitfähige Material kann beispielsweise in Form einer Beschichtung auf einem elastomeren Material oder in Form von Partikeln in einer Elastomermatrix vorgesehen werden.

Neben den detailliert beschriebenen Kontaktelementen sind auch weitere Arten von Kontaktelementen denkbar, so insbesondere mechanische oder optische Kontaktelemente. Ebenso können Kontaktelemente zum Einsatz kommen, die zum Teil der Auswerferplatte und zum Teil einer Auswerferstange zugeordnet werden können, so beispielsweise in Form eines Steckers und einer dazu komplementären Buchse.

Es ist möglich, Kontaktelemente nur für einzelne Auswerferstangen, beispielsweise für besonders anfällige Auswerferstangen, vorzusehen oder für alle Auswerferstangen eines Werkzeugblocks.

Die Aufgabe der Erfindung wird auch durch ein Maschinensystem mit einer Formteilmaschine nach den obigen Ausführungen und einem in den Trägerrahmen aufgenommenen Werkzeugblock mit zumindest einer Auswerferstange gelöst.

Das Kontaktelement des Maschinensystems ist bevorzugt der Auswerferstange und/oder der Auswerferplatte zugeordnet.

Die oben hinsichtlich der Formteilmaschine beschriebenen vorteilhaften Weiterbildungen können unter Erzielung der gleichen Vorteile auch in dem Maschinensystem angewandt werden.

Die Aufgabe der Erfindung wird auch durch ein Kontaktelement für eine Formteilmaschine mit einem feststehenden ersten Trägerrahmen und einem relativ zu dem ersten Trägerrahmen entlang einer Schließrichtung zwischen einer Offenstellung und einer Schließstellung bewegbaren zweiten Trägerrahmen zur gemeinsamen Aufnahme eines zumindest eine Auswerferstange aufweisenden Werkzeugblocks und mit einer Auswerferplatte gelöst, wobei die Auswerferplatte relativ zu mindestens einem Trägerrahmen in Schließrichtung bewegbar ist und wobei das Kontaktelement der Auswerferstange und/oder der Auswerferplatte zuordenbar ist. Die oben hinsichtlich des Kontaktelements der Formteilmaschine beschriebenen vorteilhaften Weiterbildungen können unter Erzielung der gleichen Vorteile auch in dem erfindungsgemäßen Kontaktelement angewandt werden.

Die Aufgabe der Erfindung wird außerdem auch durch die Verwendung des erfindungsgemäßen Kontaktelements in einer Formteilmaschine oder einem Maschinensystem, insbesondere einer Formteilmaschine oder einem Maschinensystem nach der obigen Beschreibung, gelöst.

Darüber hinaus wird die Aufgabe der Erfindung auch durch ein Verfahren zum Betreiben eines ein Formwerkzeug aufweisenden Maschinensystems, insbesondere des oben beschriebenen Maschinensystems, mit folgenden Schritten gelöst:
a) Schließen des Formwerkzeugs
b) Schäumen eines Formteils
c) Öffnen des Formwerkzeugs
d) Auswerfen des Formteils.

Die Schritte a) bis d) werden bevorzugt in der aufgelisteten Reihenfolge durchgeführt.

Das Verfahren ist dadurch gekennzeichnet, dass beim Auswerfen mittels zumindest einem Kontaktelement und einer Auswerteeinrichtung Kontakte zwischen zumindest einer Auswerferstange und einer Auswerferplatte des Maschinensystems erfasst werden, und die erfassten Kontakte mit in einer Speichereinheit hinterlegten Informationen verglichen werden, um zu ermitteln, ob die Auswerferstange funktionsfähig ist. Der Vergleich der erfassten Kontakte mit den in einer Speichereinheit hinterlegten Informationen erfolgt insbesondere anhand erfasster Ist-Angaben wie Anzahl und/oder Ort und/oder Zeitpunkt und/oder Zeitdauer der Kontakte zwischen Auswerferplatte und Auswerferstangen und hinterlegter Soll-Angaben gleicher Art.

Gibt es eine Abweichung bei dem Vergleich, übermittelt die Auswerteeinrichtung bevorzugt ein Warnsignal an eine Steuereinheit des Maschinensystems. Die Steuereinheit kann dann ein Alarmsignal an den Anwender ausgeben oder den Betrieb des Maschinensystems unterbrechen. Auf diese Weise kann größerer Schaden an dem Maschinensystem verhindert werden.

Die oben hinsichtlich der Formteilmaschine und des Maschinensystems beschriebenen vorteilhaften Weiterbildungen können unter Erzielung der gleichen Vorteile auch in dem erfindungsgemäßen Verfahren angewandt werden. Die hinsichtlich des Verfahrens beschriebenen vorteilhaften Weiterbildungen können unter Erzielung der gleichen Vorteile auch in der erfindungsgemäßen Formteilmaschine und in dem erfindungsgemäßen Maschinensystem angewandt werden.

Bei vorteilhaften Weiterbildungen weist das Verfahren zusätzlich folgende Schritte für das Hinterlegen von Soll-Angaben auf:
e) Bewegen der Auswerferplatte zu der zumindest einen Auswerferstange, sodass zwischen Auswerferplatte und Auswerferstange mittels des Kontaktelements zumindest ein Kontakt entsteht,
f) Erfassen des zumindest einen Kontakts mittels der Auswerteeinrichtung,
g) Hinterlegen von Soll-Angaben, insbesondere von Anzahl und/oder Ort und/oder Zeitpunkt und/oder Zeitdauer des zumindest einen Kontakts, in einer Speichereinheit des Maschinensystems.

Die Schritte e) bis g) werden bevorzugt vor den Schritten a) bis d) durchgeführt. Bevorzugt werden die Schritte e) bis g) in der aufgelisteten Reihenfolge durchgeführt.

In Schritt e) wird die Auswerferplatte bevorzugt soweit bewegt, bis alle Auswerferstangen mittels des Kontaktelements mit der Auswerferplatte in Kontakt stehen.

Das Verfahren kann ferner folgende Schritte zum Ausrüsten eines Maschinensystems umfassen, die bevorzugt vor den Schritten a) bis d) und besonders bevorzugt vor den Schritten e) bis g) durchgeführt werden. h) Bereitstellen einer Formteilmaschine mit einem feststehenden ersten Trägerrahmen und einem relativ zu dem ersten Trägerrahmen entlang einer Schließrichtung zwischen einer Offenstellung und einer Schließstellung bewegbaren zweiten Trägerrahmen zur gemeinsamen Aufnahme eines zumindest eine Auswerferstange aufweisenden Werkzeugblocks und mit einer Auswerferplatte, wobei die Auswerferplatte relativ zu mindestens einem Trägerrahmen in Schließrichtung bewegbar ist,
i) Anordnen eines Werkzeugblocks mit einer Auswerferstange an den Trägerrahmen,
j) Zuordnen zumindest eines Kontaktelements zu der Auswerferstange und/oder der Auswerferplatte,
k) Anschließen einer Auswerteeinrichtung zum Erfassen von Kontakten zwischen Auswerferstange und Auswerferplatte mittels des Kontaktelements an die Formteilmaschine.

Die Schritte h) bis k) werden bevorzugt in der aufgelisteten Reihenfolge durchgeführt.

Die Erfindung wird nachfolgend anhand der Figuren beispielhaft dargestellt und erläutert. Es zeigt dabei:
- Figur 1: eine erste Ausführungsform eines erfindungsgemäßen Maschinensystems in einer Schnittansicht;
- Figur 2: ein erfindungsgemäßes Kontaktelement in einer Schnittansicht;
- Figur 3: eine zweite Ausführungsform eines erfindungsgemäßen Maschinensystems in einer Schnittansicht;
- Figur 3x: das Detail x der Figur 3;
- Figur 4: drei Signal-Zeit-Diagramme während des Auswurfvorgangs.

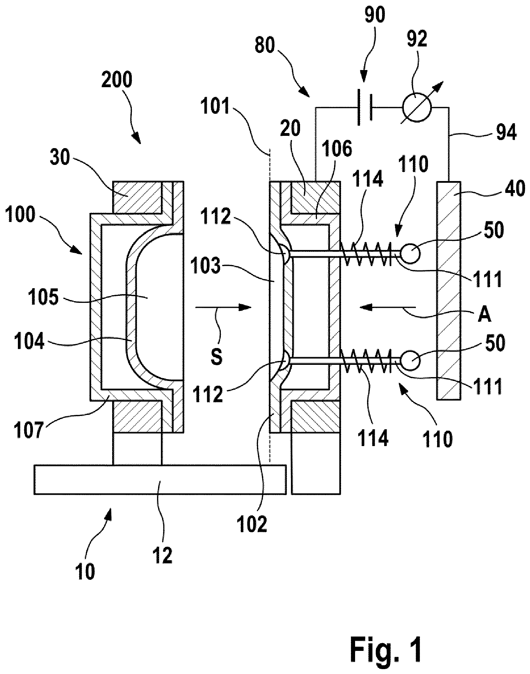

Das Maschinensystem 200 gemäß Figur 1 weist eine Formteilmaschine 10 mit einem ersten Trägerrahmen 20 und einem zweiten Trägerrahmen 30 sowie einen Werkzeugblock 100 auf. Der erste Trägerrahmen 20 ist feststehend. Der zweite Trägerrahmen 30 kann relativ zu dem ersten Trägerrahmen 20 in Schließrichtung S bewegt werden. Hierzu ist der zweite Trägerrahmen 30 auf einer Schiene 12 der Formteilmaschine 10 angeordnet.

In dem ersten Trägerrahmen 20 sind ein erster Gehäuseteil 106 und eine erste Formwerkzeughälfte 102 und in dem zweiten Trägerrahmen 30 ein zweiter Gehäuseteil 107 und eine zweite Formwerkzeughälfte 104 angeordnet. Die erste Formwerkzeughälfte 102 weist eine erste Teilkavität 103 und die zweite Formwerkzeughälfte 104 eine zweite Teilkavität 105 auf. Die Formwerkzeughälften 102, 104 bilden gemeinsam ein Formwerkzeug mit einer Trennebene 101, in dessen Kavität, die aus den Teilkavitäten 103, 105 gebildet wird, ein Formteil hergestellt werden kann. Die Gehäuseteile 106, 107 umgeben die Formwerkzeughälften 102, 104 und bilden gemeinsam das Gehäuse der Prozesskammer des Werkzeugblocks 100.

Zur Herstellung des Formteils wird das Formwerkzeug geschlossen, indem der zweite Trägerrahmen 30 in Schließrichtung S auf den ersten Trägerrahmen 20 zu bewegt wird, bis die Formwerkzeughälften 102, 104 aneinander anliegen. Sodann kann durch eine nicht näher dargestellte Fülleinrichtung die Kavität mit Kunststoffperlen gefüllt werden. Anschließend wird durch eine ebenfalls nicht näher dargestellte Dampfvorrichtung Wasserdampf in die Prozesskammer und anschließend in die Kavität gegeben, woraufhin die Kunststoffperlen expandieren und miteinander verschweißen. Das Formwerkzeug kann dann wieder geöffnet und das hergestellte Formteil entnommen werden.

Die erste Formwerkzeughälfte 102 weist mehrere Auswerferstangen 110 mit jeweils einem Stangenkörper 111 auf, wobei sich die Stangenkörper 111 im Wesentlichen in horizontaler Richtung erstreckt. Jede der Auswerferstangen 110 weist an einem ersten Ende des Stangenkörpers 111 einen Auswerferteller 112 auf. Die Auswerferteller 112 bilden einen Teil der Kontur der ersten Teilkavität 103. Durch eine Bewegung der Auswerferstangen 110 entgegen der Schließrichtung S, nachfolgend als Auswerfrichtung A bezeichnet, kann ein in dem Formwerkzeug hergestelltes Formteil ausgestoßen werden. Bei anderen Ausführungsformen können Schließrichtung S und Auswerfrichtung A auch identisch, also nicht entgegengesetzt sein.

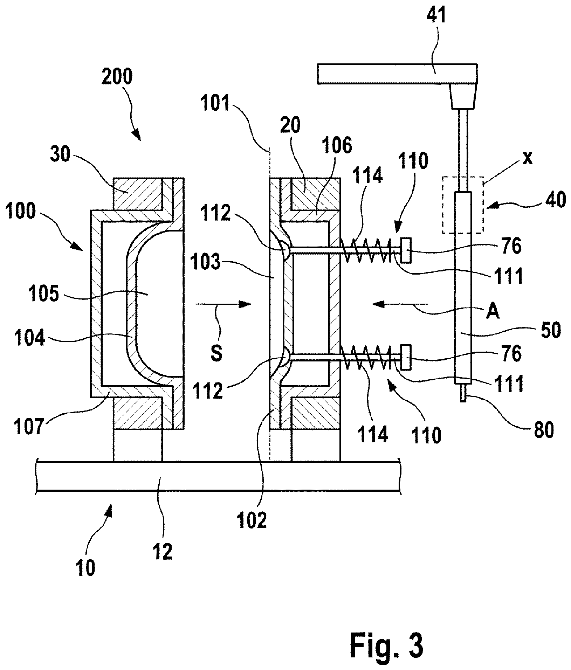

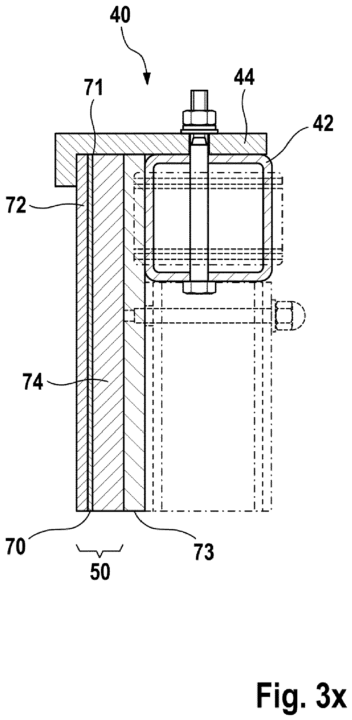

Für die Bewegung der Auswerferstangen 110 aus der dargestellten Ausgangslage in Auswerfrichtung A weist die Formteilmaschine 10 eine Auswerferplatte 40 auf. Die Auswerferplatte 40 ist entlang einer Auswerferschiene 41 (hier nicht dargestellt, siehe Figur 3) in Auswerfrichtung A bewegbar. Bei einer Bewegung in Auswerfrichtung A kommt die Auswerferplatte 40 mit den Auswerferstangen 110 in Kontakt und bewegt bei einer weiteren Bewegung in Auswerfrichtung A die Auswerferstangen 110 in der Auswerfrichtung A mit. Auf diese Weise wird ein hergestelltes Formteil ausgeworfen.

Bewegt sich die Auswerferplatte 40 anschließend entgegen der Auswerfrichtung A zurück, werden die Auswerferstangen 110 von Rückstellfedern 114 in ihre Ausgangslage zurück gedrückt. Während der Bewegung der Auswerferplatte 40 verliert diese den Kontakt mit den Auswerferstangen 110, sobald die Auswerferstangen 110 in ihrer Ausgangsposition angekommen sind.

Die Auswerferstangen 110 weisen jeweils ein Kontaktelement 50 auf. Die Kontaktelemente 50 sind endseitig an den Stangenkörpern 111 gegenüberliegend zu den Auswerfertellern 112 angeordnet.

Die Kontaktelemente 50 sind elektrisch leitend und verbinden somit die Stangenkörper 111 elektrisch mit der Auswerferplatte 40. Die Formteilmaschine 10 weist eine Auswerteeinrichtung 80 auf. Die Auswerteeinrichtung 80 weist eine Spannungsquelle 90 und ein mit der Spannungsquelle 90 verbundenes Spannungsmessgerät 92 auf. Die Spannungsquelle 90 ist einerseits mit dem ersten Trägerrahmen 20 und andererseits mit dem Spannungsmessgerät 92 verbunden. Von dem Spannungsmessgerät 92 verläuft eine Leitung 94 zu der Auswerferplatte 40.

Kommt es zu einem Kontakt zwischen Auswerferstange 110 und Auswerferplatte 40, so wird ein Stromkreis geschlossen. Der Stromkreis verläuft ausgehend von der Spannungsquelle 90 zu dem ersten Trägerrahmen 20, zu der ersten Kammerhälfte 106, zu der ersten Formwerkzeughälfte 102, zu den Stangenkörpern 111 der Auswerferstangen 110 und von dort über die Kontaktelemente 50 zu der Auswerferplatte 40, weiter zu dem Spannungsmessgerät92 und zurück zur Spannungsquelle 90.

Bei einer angelegten Spannung lässt sich mittels des Spannungsmessgeräts 92 ermitteln, ob zwischen den Auswerferstangen 110 und der Auswerferplatte 40 ein Kontakt besteht. Durch die ermittelte Spannung lässt sich außerdem ermitteln, wie viele der Auswerferstangen 110 Kontakt zu der Auswerferplatte 40 haben. Bleibt eine Auswerferstange 110 während des Auswurfvorgangs bei der Rückwärtsbewegung der Auswerferplatte 40 beispielsweise in Folge von Verschmutzung, Beschädigung oder Mangelschmierung stecken, gelangt die Auswerferstange 110 also nicht in ihre Ausgangsposition, so kann dies mittels des Spannungsmessgeräts 92 erfasst werden.

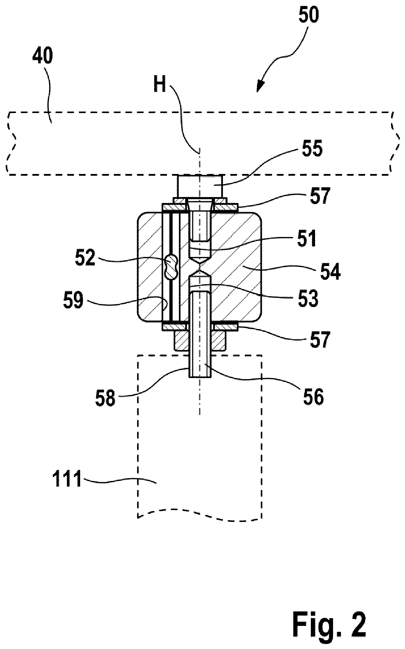

Figur 2 zeigt beispielhaft den Aufbau eines Kontaktelements 50, das einer Auswerferstange 110 (hier nicht dargestellt) zuordenbar ist. Das Kontaktelement 50 weist einen zylindrischen Korpus 54 mit einer Hauptachse H auf, welcher aus einem isolierenden Material besteht. Der Korpus 54 weist zwei konzentrische, entlang der Hauptachse H des Korpus 54 verlaufende Sackbohrungen 51, 53 auf, die nicht ineinander übergehen, also getrennt sind. In der Sackbohrung 51 ist eine Schraube 55 als elektrisches Anschlusselement angeordnet. In der Sackbohrung 53 ist ein Gewindestift 56 als elektrisches Anschlusselement angeordnet.

Der Korpus 54 weist ferner eine exzentrische Durchgangsbohrung 59 auf, in der ein elektrisches Widerstandselement 52 angeordnet ist. Das elektrische Widerstandselement 52 ist über Unterlegscheiben 57 einerseits mit der Schraube 55 und andererseits mit dem Gewindestift 56 elektrisch verbunden. Der Gewindestift 56 weist ein Verbindungsmittel 58 in Form seines Außengewindes auf. Das Kontaktmittel 50 kann mittels des Verbindungsmittels 58 endseitig an einem Stangenkörper 111 (hier nicht dargestellt) montiert werden und auf diese Weise der zugehörigen Auswerferstange 110 zugeordnet werden. Der Gewindestift 56 ist dann elektrisch mit dem Stangenkörper 111 verbunden Bei bestimmungsgemäßem Gebrauch kommt die Auswerferplatte 40 während des Auswurfvorgangs mit der Schraube 55 des Kontaktelements 50 in Kontakt. Durch den beschriebenen Aufbau des Kontaktelements 50 kann dann ein Strom von der Auswerferplatte 40 (hier ebenfalls nicht dargestellt) über die Schraube 55, das elektrische Widerstandselement 52 und weiter über den Gewindestift 56 in den Stangenkörper 111 fließen.

Das Maschinensystem 200 gemäß Figur 3 weist eine Formteilmaschine 10 mit einem ersten Trägerrahmen 20 und einem zweiten Trägerrahmen 30 auf. In den Trägerrahmen 20, 30 sind Gehäuseteile 106, 107 sowie Formwerkzeughälften 102, 104 eines Werkzeugblocks 100 aufgenommen. Der zweite Trägerrahmen 30 ist in Schließrichtung S bewegbar, so dass er für den Schäumprozess das aus der ersten Formwerkzeughälfte 102 und der zweiten Formwerkzeughälfte 104 gebildete Formwerkzeug schließen und öffnen kann.

Die erste Formwerkzeughälfte 102 weist mehrere Auswerferstangen 110 mit jeweils einem horizontal verlaufenden Stangenkörper 111 auf. An dem Stangenkörper 111 ist jeweils an einem ersten Ende ein Auswerferteller 112 angeordnet. Die Auswerferteller 112 der Auswerferstangen 110 bilden einen Teil der ersten Kavität 103 der ersten Formwerkzeughälfte 102.

Die Auswerferplatte 40, mittels der die Auswerferstangen 110 in Auswurfrichtung A bewegt werden können, ist bei der in Figur 3 dargestellten Ausführungsform mehrschichtig. Die Auswerferplatte 40 kann entlang einer Auswerferschiene 41 in Auswurfrichtung A bewegt werden. An der Auswerferplatte 40 ist eine Auswerteeinrichtung 80 angeordnet, welche die Kontakte zwischen Auswerferstangen 110 und Auswerferplatte 40 erfasst.

Der Aufbau der Auswerferplatte 40 ist in Figur 3x, welche das Detail x der Figur 3 zeigt, näher dargestellt. Die Auswerferplatte 40 weist einen Rahmen 42 auf. Auf dem Rahmen 42 ist eine Grundplatte 73 und auf der Grundplatte 73 ist eine Isolatorplatte 74 eines Kontaktelements 50 angeordnet. Bei anderen Ausführungsformen kann die Grundplatte 73 auch wegfallen und die Isolatorplatte 74 kann unmittelbar auf dem Rahmen 42 angeordnet sein. Das Kontaktelement 50 weist darüber hinaus eine PCAP-Folie 70, ein teilweise umlaufendes Dichtband 71 und eine Schutzplatte 72 auf. Die PCAP-Folie 70 ist auf der Isolatorplatte 74 angeordnet und wird in ihren Randbereichen von dem Dichtband 71 vor äußeren Umwelteinflüssen, wie beispielsweise Feuchtigkeit, geschützt. Feuchtigkeit tritt bei dem Schäumprozess aufgrund des verwendeten Wasserdampfes regelmäßig auf. Die Schutzplatte 72 ist auf dem Dichtband 71 und der PCAP-Folie 70 angeordnet und schützt insbesondere die PCAP-Folie 70 vor einer Beschädigung durch die Auswerferstangen 110. Das Kontaktelement 50 wird von mehreren Befestigungswinkeln 44 an dem Rahmen 42 gehalten.

Die Auswerferstangen 110 weisen an ihrem dem Auswerferteller 112 gegenüberliegenden Ende jeweils ein Druckelement 76 (siehe Figur 3) auf. Das Druckelement 76 besteht teilweise aus einem leitfähigen Material und teilweise aus einem Elastomermaterial.

Kommt eine Auswerferstange 110 mit der Auswerferplatte 40 in Kontakt, so berühren sich nur das Druckelement 76 der Auswerferstange 110 und die Schutzplatte 72 der Auswerferplatte 40. Durch das leitfähige Material des Druckelements 76 wird dessen Anwesenheit dennoch von der Auswerteeinrichtung 80, welche mit der PCAP-Folie 70 verbunden ist, registriert. Durch die PCAP-Folie 70 ist die Auswerteeinrichtung 80 nicht nur in der Lage, zu erfassen, dass ein Kontakt zwischen einer Auswerferstange 110 und der Auswerferplatte 40 besteht, sondern kann zusätzlich den genauen Ort des Kontakts ermitteln. Die auf diese Weise von der Auswerteeinrichtung 80 generierten Informationen können auf einer Anzeige dargestellt und/oder an eine Steuereinrichtung (nicht dargestellt) der Formteilmaschine 10 weitergegeben werden. Werden während des Auswurfvorgangs weniger Kontakte erfasst als vorgesehen sind, kann ein Warnsignal von der Auswerteeinrichtung 80 ausgegeben werden.

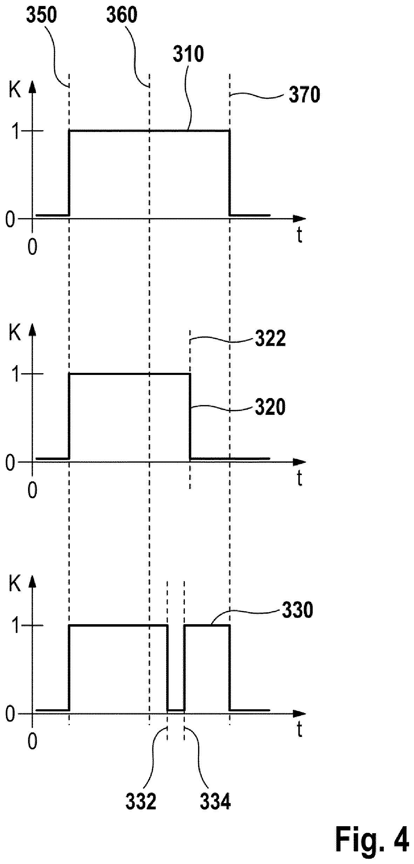

Figur 4 zeigt beispielhaft drei unterschiedliche Kontaktsignale für eine Auswerferstange, welche von einer Auswerteeinrichtung 80 gemäß der Erfindung gemessen werden können. Dargestellt ist ein Normsignal 310, welches den fehlerlosen Betrieb darstellt, sowie zwei Fehlersignale 320, 330, welche den fehlerbehafteten Betrieb in zwei verschiedenen Fällen darstellen. Zu jedem Signal 310, 320, 330 ist die Signalstärke K über der Zeit t dargestellt, wobei die Signalstärke K zwischen 0 und 1 schwankt. 0 bedeutet kein Kontakt, 1 bedeutet Kontakt zwischen Auswerferstange 110 und Auswerferplatte 40.

Das Normsignal 310 beginnt beim Zeitpunkt t = 0 mit der Signalstärke K = 0. Bei dem planmäßigen Kontaktbeginn 350 steigt die Signalstärke K auf 1 und bleibt auch bei dem Umkehrpunkt 360, ab dem die Auswerferplatte 40 nicht mehr in Auswurfrichtung A, sondern entgegen der Auswurfrichtung A bewegt wird, bestehen. Das Normsignal 310 verläuft weiter auf K = 1 bis zu dem planmäßigen Kontaktende 370, zu welchem Zeitpunkt Auswerferplatte 40 und Auswerferstange 110 den Kontakt verlieren. Das Normsignal 310 sinkt aufgrund dessen auf den Wert K = 0 ab und verläuft weiter auf diesem Niveau.

Das erste Fehlersignal 320 beginnt ebenfalls bei t = 0 und K = 0. Auch hier steigt das erste Fehlersignal 320 bei dem planmäßigen Kontaktbeginn 350 auf den Wert K = 1 und verläuft dort auch über den Umkehrpunkt 360 hinaus, jedoch nicht bis zum planmäßigen Kontaktende 370, sondern nur bis zum Fehlerzeitpunkt 322. Bei dem Fehlerzeitpunkt 322 fällt das Signal auf K = 0 ab, was bedeutet, dass die Auswerferstange 110 und die Auswerferplatte 40 vorzeitig den Kontakt verloren haben. In einem solchen Fall kann die Auswerteeinrichtung 80 ein Warnsignal ausgeben, welches beispielsweise an die Steuereinrichtung der Formteilmaschine 10 übertragen wird.

Bei dem zweiten Fehlersignal 330 beginnt der Verlauf ebenfalls bei t = 0 und K = 0 und steigt planmäßig bei dem planmäßigen Kontaktbeginn 350 auf K = 1. Das zweite Fehlersignal 330 verläuft dann auf diesem Niveau über den Umkehrpunkt 360 hinaus bis zu dem Fehlerzeitpunkt 332, wo es auf K = 0 abfällt. Allerdings steigt das zweite Fehlersignal 330 bei dem Zeitpunkt 334 wieder auf Niveau K = 1 und verläuft anschließend weiter auf diesem Niveau bis zu dem planmäßigen Kontaktende 370, wo das zweite Fehlersignal 330 erneut planmäßig auf K = 0 absinkt und weiter auf diesem Niveau verläuft. Das zweite Fehlersignal 330 lässt den Schluss zu, dass die Auswerferstange 110 während der Rückkehr in ihre Ausgangsposition kurzzeitig stecken geblieben, jedoch schlussendlich ordnungsgemäß in ihre Ausgangslage zurückgekehrt ist. Der Grund für ein solches Verhalten kann beispielsweise in einer funktionsuntüchtigen Rückstellfeder, einer Verschmutzung oder einer Mangelschmierung liegen. Erfasst die Auswerteeinrichtung 80 das zweite Fehlersignal 330, so kann sie beispielsweise ein Wartungssignal ausgeben, mit welchem der Steuereinrichtung der Formteilmaschine 10 signalisiert wird, dass die Formteilmaschine 10 zwar einsatzbereit ist, dass aber die Auswerferstange 110 zeitnah kontrolliert und ggf. repariert werden sollte.

### Bezugszeichenliste

- 10: Formteilmaschine
- 12: Schiene

- 20: erster Trägerrahmen

- 30: zweiter Trägerrahmen

- 40: Auswerferplatte
- 41: Auswerferschiene
- 42: Rahmen
- 44: Befestigungswinkel

- 50: Kontaktelement
- 51: Sackbohrung
- 52: elektrisches Widerstandselement
- 53: Sackbohrung
- 54: Korpus
- 55: elektrisches Anschlusselement
- 56: elektrisches Anschlusselement
- 57: Unterlegscheibe
- 58: Verbindungsmittel

- 70: PCAP-Folie
- 71: Dichtband
- 72: Schutzplatte
- 73: Grundplatte
- 74: Isolatorplatte
- 76: Druckelement
- 80: Auswerteeinrichtung

- 90: Spannungsquelle
- 92: Spannungsmessgerät
- 94: Leitung

- 100: Werkzeugblock
- 101: Trennebene
- 102: erste Formwerkzeughälfte
- 103: erste Teilkavität
- 104: zweite Formwerkzeughälfte
- 105: zweite Teilkavität
- 106: erster Gehäuseteil
- 107: zweiter Gehäuseteil

- 110: Auswerferstange
- 111: Stangenkörper
- 112: Auswerferteller
- 114: Rückstellfeder

- 200: Maschinensystem

- 310: Normsignal
- 320: erstes Fehlersignal
- 322: Fehlerzeitpunkt
- 330: zweites Fehlersignal
- 332: Fehlerzeitpunkt
- 334: Zeitpunkt
- 350: planmäßiger Kontaktbeginn
- 360: Umkehrpunkt
- 370: planmäßiges Kontaktende

- A: Auswurfrichtung
- H: Hauptachse
- K: Signalstärke
- S: Schließrichtung

## Patentansprüche

1. Formteilmaschine (10) mit einem feststehenden ersten Trägerrahmen (20) und einem relativ zu dem ersten Trägerrahmen (20) entlang einer Schließrichtung (S) zwischen einer Offenstellung und einer Schließstellung bewegbaren zweiten Trägerrahmen (30) zur gemeinsamen Aufnahme eines zumindest eine Auswerferstange (110) aufweisenden Werkzeugblocks (100) und mit einer Auswerferplatte (40), wobei die Auswerferplatte (40) relativ zu mindestens einem Trägerrahmen (20, 30) in Schließrichtung (S) bewegbar ist,
**gekennzeichnet durch** zumindest ein der Auswerferstange (110) und/oder der Auswerferplatte (40) zuordenbares Kontaktelement (50) und durch eine Auswerteeinrichtung (80) zum Erfassen von Kontakten zwischen Auswerferstange (110) und Auswerferplatte (40) mittels des Kontaktelements (50).

2. Formteilmaschine nach Anspruch 1,
**dadurch gekennzeichnet, dass** das Kontaktelement (50) zumindest ein elektrisches Bauteil aufweist.

3. Formteilmaschine nach Anspruch 1 oder 2,
**dadurch gekennzeichnet, dass** das Kontaktelement (50) elektrisch leitend ist und ein elektrisches Widerstandselement (52) aufweist, dass eine Spannungsquelle (90) an die Auswerferplatte (40) und zumindest einen der Trägerrahmen (20, 30) angeschlossen ist und dass die Auswerteeinrichtung (80) zum Erfassen einer zwischen der Auswerferplatte (40) und der Auswerferstange (110) anstehenden elektrischen Spannung ausgebildet ist.

4. Formteilmaschine nach Anspruch 3,
**dadurch gekennzeichnet, dass** das Kontaktelement (50) einen Korpus (54) aus einem elektrisch isolierenden Material und zwei gegenüberliegend an dem Korpus (54) angeordnete elektrische Anschlusselemente (55, 56) aufweist, wobei das elektrische Widerstandselement (52) die zwei elektrischen Anschlusselemente (55, 56) miteinander verbindet.

5. Formteilmaschine nach einem der vorhergehenden Ansprüche,
**dadurch gekennzeichnet, dass** das Kontaktelement (50) zumindest ein Verbindungmittel (58) aufweist, mittels dessen das Kontaktelement (50) an einer Auswerferstange (110) anbringbar ist.

6. Formteilmaschine nach Anspruch 1 oder 2,
**dadurch gekennzeichnet, dass** das Kontaktelement (50) eine kapazitive Sensoreinheit aufweist, wobei die kapazitive Sensoreinheit eine PCAP-Folie (70) ist.

7. Formteilmaschine nach Anspruch 6,
**dadurch gekennzeichnet, dass** das Kontaktelement (50) eine Schutzplatte (72) zur Kontaktierung der Auswerferstange (110) aufweist.

8. Formteilmaschine nach einem der Ansprüche 6 oder 7,
**dadurch gekennzeichnet, dass** das Kontaktelement (50) zwischen der kapazitiven Sensoreinheit und einem Rahmen (42) der Auswerferplatte (40) einen Isolator (74) aufweist.

9. Formteilmaschine nach einem der Ansprüche 6 bis 8,
**gekennzeichnet durch** zumindest ein einer Auswerferstange (110) zuordenbares Druckelement (76).

10. Formteilmaschine nach Anspruch 9,
**dadurch gekennzeichnet, dass** das Druckelement (76) zumindest teilweise aus einem leitfähigen Material besteht.

11. Maschinensystem (200) mit einer Formteilmaschine (10) nach einem der vorhergehenden Ansprüche und einem in den Trägerrahmen (20, 30) aufgenommenen Werkzeugblock (100) mit zumindest einer Auswerferstange (110), wobei das Kontaktelement (50) der Auswerferstange (110) und/oder der Auswerferplatte (40) zugeordnet ist.

12. Verwendung eines Kontaktelements (50) für eine Formteilmaschine (10) mit einem feststehenden ersten Trägerrahmen (20) und einem relativ zu dem ersten Trägerrahmen (20) entlang einer Schließrichtung (S) zwischen einer Offenstellung und einer Schließstellung bewegbaren zweiten Trägerrahmen (30) zur gemeinsamen Aufnahme eines zumindest eine Auswerferstange (110) aufweisenden Werkzeugblocks (100) und mit einer Auswerferplatte (40), wobei die Auswerferplatte (40) relativ zu mindestens einem Trägerrahmen (20,30) in Schließrichtung (S) bewegbar ist, wobei das Kontaktelement (50) der Auswerferstange (110) und/oder der Auswerferplatte (40) zuordenbar ist, zum Erfassen eines Kontakts zwischen der Auswerferstange (110) und der Auswerferplatte (40) in der Formteilmaschine (10) oder einem die Formteilmaschine (10) aufweisenden Maschinensystem (200).

13. Verfahren zum Betreiben eines ein Formwerkzeug aufweisenden Maschinensystems (200) mit folgenden Schritten:
a) Schließen des Formwerkzeugs
b) Schäumen eines Formteils
c) Öffnen des Formwerkzeugs
d) Auswerfen des Formteils
**dadurch gekennzeichnet, dass** beim Auswerfen mittels zumindest einem Kontaktelement (50) und einer Auswerteeinrichtung (80) Kontakte zwischen zumindest einer Auswerferstange (110) und einer Auswerferplatte (40) des Maschinensystems (200) erfasst werden und die erfassten Kontakte mit in einer Speichereinheit des Maschinensystems (200) hinterlegten Informationen verglichen werden, um zu ermitteln, ob die Auswerferstange (110) funktionsfähig ist.

14. Verfahren nach Anspruch 13,
**dadurch gekennzeichnet, dass** der Vergleich der erfassten Kontakte mit den in einer Speichereinheit hinterlegten Informationen anhand erfasster Ist-Angaben wie Anzahl und/oder Ort und/oder Zeitpunkt und/oder Zeitdauer der Kontakte zwischen Auswerferplatte und Auswerferstangen und hinterlegter Soll-Angaben gleicher Art erfolgt, wobei die Auswerteeinrichtung ein Warnsignal an eine Steuereinheit des Maschinensystems übermittelt, falls es eine Abweichung bei dem Vergleich gibt.

15. Verfahren nach einem der Ansprüche 13 oder 14,
**gekennzeichnet durch** folgende Schritte:
e) Bewegen der Auswerferplatte (40) zu der zumindest einen Auswerferstange (110), sodass zwischen Auswerferplatte (40) und Auswerferstange (110) mittels des Kontaktelements (50) zumindest ein Kontakt entsteht,
f) Erfassen des zumindest einen Kontakts mittels der Auswerteeinrichtung (80),
g) Hinterlegen von Soll-Angaben des zumindest einen Kontakts in einer Speichereinheit des Maschinensystems (200).

## Claims

1. A moulding machine (10) with a stationary first carrier frame (20) and a second carrier frame (30) movable relative to the first carrier frame (20) along a closing direction (S) between an open position and a closed position for jointly receiving a mould block (100) having at least one ejector rod (110), and with an ejector plate (40), the ejector plate (40) being movable relative to at least one carrier frame (20, 30) in the closing direction (S),
**characterised by** at least one contact element (50) which can be associated with the ejector rod (110) and/or the ejector plate (40) and by an evaluation device (80) for detecting contacts between the ejector rod (110) and the ejector plate (40) by means of the contact element (50).

2. The moulding machine according to claim 1,
**characterised in that** the contact element (50) comprises at least one electrical component.

3. The moulding machine according to claim 1 or 2,
**characterised in that** the contact element (50) is electrically conductive and has an electrical resistance element (52), **in that** a voltage source (90) is connected to the ejector plate (40) and at least one of the carrier frames (20, 30), and **in that** the evaluation device (80) is designed for detecting a voltage between the ejector plate (40) and the ejector rod (110).

4. The moulding machine according to claim 3,
**characterised in that** the contact element (50) comprises a body (54) of an electrically insulating material and two opposing electrical connection elements (55, 56) arranged opposite one another on the body (54), wherein the electrical resistance element (52) connects the two electrical connection elements (55, 56) to one another.

5. The moulding machine according to any one of the preceding claims,
**characterised in that** the contact element (50) has at least one connection means (58) by means of which the contact element (50) can be attached to an ejector rod (110).

6. The moulding machine according to claim 1 or 2,
**characterised in that** the contact element (50) comprises a capacitive sensor unit, wherein the capacitive sensor unit is a PCAP foil (70).

7. The moulding machine according to claim 6,
**characterised in that** the contact element (50) has a protective plate (72) for contacting the ejector rod (110).

8. The moulding machine according to any one of claims 6 or 7,
**characterised in that** the contact element (50) comprises an insulator (74) between the capacitive sensor unit and a frame (42) of the ejector plate (40).

9. The moulding machine according to any one of claims 6 to 8,
**characterised by** at least one pressure element (76) associable with an ejector rod (110).

10. The moulding machine according to claim 9,
**characterised in that** the pressure element (76) is at least partially made of a conductive material.

11. A machine system (200) comprising a moulding machine (10) according to any one of the preceding claims and a mould block (100) accommodated in the carrier frames (20, 30) and having at least one ejector rod (110), wherein the contact element (50) is associated with the ejector rod (110) and/or the ejector plate (40).

12. Use of a contact element (50) for a moulding machine (10) with a stationary first carrier frame (20) and a second carrier frame (30) movable relative to the first carrier frame (20) along a closing direction (S) between an open position and a closed position for jointly receiving a mould block (100) having at least one ejector rod (110), and with an ejector plate (40), wherein the ejector plate (40) is movable relative to at least one carrier frame (20, 30) in the closing direction (S), wherein the contact element (50) can be associated with the ejector rod (110) and/or the ejector plate (40) for detecting a contact between the ejector rod (110) and the ejector plate (40) in the moulding machine (10) or a machine system (200) comprising the moulding machine (10).

13. A method of operating a machine system (200) having a mould, comprising the steps of:
a) closing the mould
b) foaming a moulded part
c) opening the mould
d) ejecting the moulded part
**characterised in that,** during ejection, contacts between at least one ejector rod (110) and an ejector plate (40) of the machine system (200) are detected by means of at least one contact element (50) and an evaluation device (80) and the detected contacts are compared with information stored in a memory unit of the machine system (200) in order to determine whether the ejector rod (110) is functional.

14. The method according to claim 13,
**characterised in that** the comparison of the detected contacts with the information stored in a memory unit is carried out on the basis of detected actual data such as the number and/or location and/or time and/or duration of the contacts between the ejector plate and ejector rods and stored target data of the same type, wherein the evaluation device transmits a warning signal to a control unit of the machine system if there is a deviation in the comparison.

15. The method according to any one of claims 13 or 14,
**characterised by** the following steps:
e) moving the ejector plate (40) towards the at least one ejector rod (110) so that at least one contact is made between the ejector plate (40) and the ejector rod (110) by means of the contact element (50),
f) detecting the at least one contact by means of the evaluation device (80),
g) storing target information of the at least one contact in a memory unit of the machine system (200).

## Revendications

1. Machine de moulage (10) avec un premier cadre de support (20) stationnaire et un deuxième cadre de support (30) mobile par rapport au premier cadre de support (20) le long d'une direction de fermeture (S) entre une position d'ouverture et une position de fermeture, destinés à recevoir ensemble un bloc outil (100) comprenant au moins une tige d'éjection (110), et avec une plaque d'éjection (40), la plaque d'éjection (40) pouvant être déplacée vers au moins un cadre de support (20, 30) dans la direction de fermeture (S),
**caractérisée par** au moins un élément de contact (50) pouvant être associé à la tige d'éjection (110) et/ou à la plaque d'éjection (40) et par un dispositif d'exploitation (80) pour saisir des contacts entre la tige d'éjection (110) et la plaque d'éjection (40) moyennant l'élément de contact (50).

2. Machine de moulage selon la revendication 1,
**caractérisée en ce que** l'élément de contact (50) comprend au moins un composant électronique.

3. Machine de moulage selon la revendication 1 ou 2,
**caractérisée en ce que** l'élément de contact (50) est électriquement conducteur et comprend un élément de résistance électrique (52), **en ce qu'**une source de tension (90) est raccordée à la plaque d'éjection (40) et à au moins un des cadres de support (20, 30) et **en ce que** le dispositif d'exploitation (80) est configuré pour saisir une tension appliquée entre la plaque d'éjection (40) et la tige d'éjection (110).

4. Machine de moulage selon la revendication 3,
**caractérisée en ce que** l'élément de contact (50) comprend un corps (54) en un matériau électriquement isolant et deux éléments de raccordement électrique (55, 56) disposés sur le corps (54) sur des côtés opposés, l'élément de résistance électrique (52) reliant les deux éléments de raccordement (55, 56) l'un à l'autre.

5. Machine de moulage selon l'une des revendications précédentes,
**caractérisée en ce que** l'élément de contact (50) comprend au moins un élément d'attachement (58) moyennant lequel l'élément de contact (50) peut être fixé sur une tige d'éjection (110).

6. Machine de moulage selon la revendication 1 ou 2,
**caractérisée en ce que** l'élément de contact (50) comprend une unité capteur capacitive, l'unité capteur capacitive étant un film PCAP (70).

7. Machine de moulage selon la revendication 6,
**caractérisée en ce que** l'élément de contact (50) comprend une plaque de protection (72) pour contacter la tige d'éjection (110).

8. Machine de moulage selon l'une des revendications 6 ou 7,
**caractérisée en ce que** l'élément de contact (50) comprend un isolateur (74) entre l'unité capteur capacitive et un cadre (42) de la plaque d'éjection (40).

9. Machine de moulage selon l'une des revendications 6 à 8,
**caractérisée par** au moins un élément de pression (76) pouvant être associé à une tige d'éjection (110).

10. Machine de moulage selon la revendication 9,
**caractérisée en ce que** l'élément de pression (76) est au moins partiellement en un matériau conducteur.

11. Système de machine (200) avec une machine de moulage (10) selon l'une des revendications précédentes et un bloc outil (100) reçu dans les cadres de support (20, 30) et ayant au moins une tige d'éjection (110), l'élément de contact (50) étant associé à la tige d'éjection (110) et/ou à la plaque d'éjection (40).

12. Utilisation d'un élément de contact (50) pour une machine de moulage (10) avec un premier cadre de support (20) stationnaire et un deuxième cadre de support (30) mobile par rapport au premier cadre de support (20) le long d'une direction de fermeture (S) entre une position d'ouverture et une position de fermeture destinés à recevoir ensemble un bloc outil (100) comprenant au moins une tige d'éjection (110), et avec une plaque d'éjection (40), la plaque d'éjection (40) pouvant être déplacée vers au moins un cadre de support (20, 30) dans la direction de fermeture (S), l'élément de contact (50) pouvant être associé à la tige d'éjection (110) et/ou à la plaque d'éjection (40), pour saisir un contact entre la tige d'éjection (110) et la plaque d'éjection (40) dans la machine de moulage (10) ou dans un système de machine (200) comprenant la machine de moulage (10).

13. Procédé pour faire fonctionner un système de machine (200) comprenant un outil de moulage, avec les étapes suivantes :
a) fermer l'outil de moulage
b) mousser une pièce à mouler
c) ouvrir l'outil de moulage
d) éjecter la pièce moulée
caractérisé en que, lors de l'éjection, moyennant au moins un élément de contact (50) et un dispositif d'exploitation (80), des contacts entre au moins une tige d'éjection (110) et une plaque d'éjection (40) du système de machine (200) sont saisis et en ce que les contacts saisis sont comparés à des informations stockées dans une unité de mémoire du système de machine (200) afin de déterminer si la tige d'éjection (110) est opérationnelle.

14. Procédé selon la revendication 13,
**caractérisé en ce que** la comparaison des contacts saisis aux informations stockées dans une unité de mémoire est effectuée sur la base de données réelles saisies telles que le nombre et/ou l'endroit et/ou le moment et/ou la durée des contacts entre la plaque d'éjection et les tiges d'éjection et de données à atteindre du même type, le dispositif d'exploitation transmettant un signal d'alarme à une unité de commande du système de machine si la comparaison montre une dérive.

15. Procédé selon l'une des revendications 13 ou 14,
**caractérisé par** les étapes suivantes :
e) déplacer la plaque d'éjection (40) vers ladite au moins une tige d'éjection (110) afin qu'au moins un contact se forme entre la plaque d'éjection (40) et la tige d'éjection (110),
f) saisir ledit au moins un contact moyennant le dispositif d'exploitation (80),
g) déposer des données à atteindre dudit au moins un contact dans une unité de mémoire du système de machine (200).
